# EUROPÄISCHE PATENTSCHRIFT

(11) **EP 4 615 704 B1**
(45) Veröffentlichungstag und Bekanntmachung des Hinweises auf die Patenterteilung: **17.12.2025**
(21) Anmeldenummer: 24733069.9
(22) Anmeldetag: 24.05.2024
(51) Int. Cl.: B60C 99/00, G06F 30/15, G06F 30/20

(54) **VERFAHREN ZUM ERZEUGEN EINES VIRTUELLEN PROTOTYPS EINES MEHRERE RÄDER AUFWEISENDEN FAHRZEUGS**
METHOD FOR GENERATING A VIRTUAL PROTOTYPE OF A VEHICLE HAVING A PLURALITY OF WHEELS
PROCÉDÉ PERMETTANT DE GÉNÉRER UN PROTOTYPE VIRTUEL D'UN VÉHICULE COMPORTANT UNE PLURALITÉ DE ROUES

(30) Priorität: 25.05.2023 AT 504152023
(43) Veröffentlichungstag der Anmeldung: 17.09.2025
(73) Patentinhaber: AVL List GmbH, 8020 Graz (AT)
(72) Erfinder: FLECK, Andreas, 8052 Graz (AT); VILOVIC, Marin, 10000 Zagreb (HR); OSWALD, Mario, 8072 Fernitz-Mellach (AT)
(86) Internationale Anmeldenummer: PCT/AT2024/060213
(87) Internationale Veröffentlichungsnummer: WO 2024/239037

(56) Entgegenhaltungen:
- WO-A1-2022/214174
- OSWALD ET AL: "Automatische Erstellung validierter virtueller Gesamtfahrzeug-Prototypen", vol. 124, no. 4, 25 March 2022 (2022-03-25), pages 16 - 23, XP009555670, ISSN: 2192-8800, Retrieved from the Internet <URL:https://doi.org/10.1007/s35148-022-0830-7> [retrieved on 20220401], DOI: 10.1007/S35148-022-0830-7
- SALEHI MARZIEH: "LAT100, PREDICTION OF TIRE DRY GRIP", 31 July 2017 (2017-07-31), XP055896430, Retrieved from the Internet <URL:https://ris.utwente.nl/ws/portalfiles/portal/24319058/final_booklet_new_marzieh.pdf>
- OLAZAGOITIA JOS? LUIS ET AL: "Identification of Tire Model Parameters with Artificial Neural Networks", APPLIED SCIENCES, vol. 10, no. 24, 1 December 2020 (2020-12-01), pages 9110, XP093180519, ISSN: 2076-3417, DOI: 10.3390/app10249110

## Beschreibung

Die Erfindung betrifft ein Verfahren zum Erzeugen eines virtuellen Prototyps eines mehrere Räder aufweisenden Fahrzeugs auf der Grundlage von Daten aus Straßenmessungen, ein Computerprogramm oder Speichermedium welches Anweisungen zur Durchführung eines solchen Verfahrens enthält und ein System zum Erzeugen eines virtuellen Prototyps eines Fahrzeugs auf der Grundlage von Daten aus Straßenmessungen.

Räder dienen im Fahrzeug dazu, die nötige Kraftübertragung zur Fahrbahn zu gewährleisten. Von besonderer Relevanz für die Kraftübertragung ist der häufig aus einem Gummimaterial bestehende Reifen, der den Kontakt zwischen Fahrzeug und Fahrbahn bildet. Aus dem Stand der Technik ist es bekannt, das Verhalten von Rädern und Reifen auf Basis physikalischer Daten zu analysieren.

Der Reifen nimmt im System Fahrzeug-Straße eine wichtige Rolle ein, da er als Verbindungsglied zwischen Fahrbahn und Fahrzeug alle Kräfte und Momente überträgt. Sein Kraftübertragungs- und Übertragungsverhalten wirkt sich deutlich auf das Fahrverhalten, den Komfort und die Sicherheit des gesamten Fahrzeugs aus. Der pneumatische Reifen stützt sich hauptsächlich auf das unter Überdruck eingeschlossene Gas, während nur ein geringer Anteil der Radlast direkt durch die Reifenstruktur getragen wird. Die Eigenschaften des Reifens werden durch die Form, die konstruktive Auslegung und den Materialeinsatz seiner Lauffläche beeinflusst. Die Entwicklung von Pkw- und Lkw-Reifen wird durch ständig verändernde und zunehmende Anforderungen an Kraftfahrzeuge entscheidend beeinflusst. Insbesondere Elektrofahrzeuge weisen aufgrund der höheren Gewichte ihrer Batterien, höheren Drehmomente und Drehgradienten aufgrund der Elektromotoren einen grundsätzlich erhöhten Verschleiß der Reifen auf. Die Gebrauchseigenschaften des Reifens beschreiben die individuellen Eigenschaften des Reifens. Zur Bestimmung der Gebrauchseigenschaften werden Straßenmessungen durchgeführt. Die theoretische Beschreibung von Reifeneigenschaften ist allgemein durch die Arbeiten von Pacejka bekannt. In diesem Zusammenhang wird exemplarisch auf die folgende wissenschaftliche Publikation verwiesen:
Pacejka, H. B.; Besselink, I. I. M.: Magic Formula Tyre Model with Transient Properties. Lisse, the Netherlands, Swets & Zeitlinger B.V., 1997, pp. 234-249.

Ferner offenbart die Promotionsschrift "LAT100, PREDICTION OF TIRE DRY GRIP" von Salehi Marzieh vom 31. Juli 2017 Schritte zur Entwicklung eines Prüfverfahrens zur Messung von Reifenhaftung unter trockenen Bedingungen im Labor und deren Vergleich mit Ergebnissen aus Straßenbedingungen.

Um das Verhalten von Fahrzeugen mit realen Reifen zu analysieren, und dies möglichst in allen relevanten Fahrmanövern und Straßen sowie Umweltbedingungen, ist eine große Anzahl an zurückgelegten Testfahrkilometern zu bewältigen.

Darüber hinaus können solche realen Testfahrten nicht schon während der Fahrzeugentwicklung, sondern erst in einem späten Entwicklungsstadium des Fahrzeugs durchgeführt werden. Aus dem Stand der Technik ist die Möglichkeit virtuelle Testfahrten mit Fahrzeug-Simulationstools durchzuführen grundsätzlich bekannt. Diese Fahrzeug-Simulationstools benötigen jedoch wiederum einen virtuellen Prototypen des Fahrzeugs.

Es ist eine Aufgabe der Erfindung, virtuelle Prototypen eines Fahrzeugs mit mehreren Rädern bereitzustellen. Insbesondere ist es eine Aufgabe der Erfindung, das Erzeugen von virtuellen Prototypen des Fahrzeugs mit mehreren Rädern möglichst weitgehend zu automatisieren.

Diese Aufgabe wird gelöst durch die Lehre der unabhängigen Ansprüche. Vorteilhafte Ausgestaltungen werden in den abhängigen Ansprüchen beansprucht.

Ein erster Aspekt der Erfindung betrifft ein Computer-Implementiertes Verfahren zum Erzeugen eines virtuellen Prototyps, insbesondere zur indirekten Messung von Werten von Pacejka-Parametern, eines mehrere Räder aufweisenden Fahrzeugs auf der Grundlage von Daten aus Straßenmessungen, folgende Arbeitsschritte aufweisend:
S1) Bereitstellen einer Reifendatenbank, die mehrere Reifendatensätze mit Pacejka-Parametern umfasst;
S2) Bereitstellen eines Fahrzeugmodells, umfassend einen Digitalen Zwilling des Fahrzeugs und ein über einen Reifendatensatz anpassbares Reifenmodell;
S3) Bereitstellen eines Reifendatensatzes für das Reifenmodell aus der Reifendatenbank;
S4) Durchführen einer Messfahrt mit dem Fahrzeug, wobei die Messfahrt ein Last-Event umfasst und während des Last-Events ein gemessener Wert eines Traktionsparameters von wenigstens einem der Räder ermittelt wird;
S5) Simulieren des Last-Events mit dem Fahrzeugmodell, wobei wenigstens ein simulierter Wert des Traktionsparameters von wenigstens einem der Räder, als Zielgröße ausgegeben wird;
S6) Vergleichen des in Arbeitsschritt S4 gemessenen Werts des Traktionsparameters mit dem in Arbeitsschritt S5 simulierten Wert des Traktionsparameters;
S7) Anpassen des Reifendatensatzes, um den simulierten Wert des Traktionsparameter dem gemessenen Wert des Traktionsparameter durch Veränderung der Werte der Pacejka-Parameter anzugleichen; wobei
die Arbeitsschritte S5 bis S7 wiederholt werden, bis eine Abbruchbedingung erreicht wird; und anschließend
S8) Ausgeben der Werte der Pacejka-Parameter des Reifenmodells.

Ein zweiter Aspekt der Erfindung betrifft ein Verfahren zum Analysieren eines Fahrzeugreifensatzes, wobei der Fahrzeugreifensatz mittels eines virtuellen Prototyps des Fahrzeugs simuliert wird, welcher mittels eines Verfahrens nach einem der vorangehenden Ansprüche erzeugt ist.

Ein dritter Aspekt der Erfindung betrifft ein System zum Erzeugen eines virtuellen Prototyps, insbesondere zur indirekten Messung von Werten von Pacejka-Parametern, eines Fahrzeugs auf der Grundlage von Daten aus Straßenmessungen, welches Mittel zum Parametrieren eines Reifenmodells des virtuellen Prototyps umfasst, welches Pacejka-Parameter aufweist, wobei die Mittel zum Parametrieren eingerichtet sind, durch, insbesondere kaskadierte, Software-in-the-loop Simulation auf der Grundlage von Messwerten der Straßenmessungen Werte von Pacejka-Parametern in Simulationsschleifen, in welchen Parameter des Reifenmodells optimiert werden, iterativ nacheinander durch Abgleich von simulierten Werten des oder der Traktionsparameter mit den durch Straßenmessungen ermittelten gemessenen Werten des oder der Traktionsparametern zu ermitteln.

Ein vierter Aspekt der Erfindung betrifft ein System zum Erzeugen eines virtuellen Prototyps eines Fahrzeugs auf der Grundlage von Daten aus Straßenmessungen, insbesondere nach Anspruch 19, welches Mittel zum Parametrieren des Reifenmodells aufweist, wobei die Mittel zum Parametrieren umfassen:
Mittel zum Berechnen wenigstens eines gemessenen Werts eines Traktionsparameters eines Reifens auf Grundlage von während einer Messfahrt aufgenommenen Werten von Messgrößen;
Mittel zum Berechnen wenigstens eines Werts für eine Schlupfrate des Reifens auf der Grundlage von während einer Messfahrt aufgenommenen Werten von Messgrößen;
Mittel zum Simulieren des Fahrzeugs mittels eines Reifenmodells, wobei in das Reifenmodell wenigstens die folgenden physikalischen Eigenschaften des Fahrzeugs als Parameter eingehen:
   Gewicht des Fahrzeugs, Radstand, Spurweite, Schwerpunkt und Lenkübersetzung;
   wobei wenigstens Werte eines Traktionsparameters als Zielgröße ausgegeben werden;
   Mittel zum Vergleichen des wenigstens einen Werts des gemessenen Traktionsparameters mit dem wenigstens einen Wert des simulierten Traktionsparameter;
   Mittel zum Anpassen des Fahrzeugmodells, um den simulierten Traktionsparameter der auf der Grundlage der Straßenmessungen ermittelten gemessenen Traktionsparameter durch Veränderung der Pacejka-Parameter anzugleichen; und
   eine Schnittstelle zum Ausgeben von Werten für Pacejka-Parameter des Reifenmodells;
   und wobei die Mittel zum Parametrieren eingerichtet sind, das Reifenmodell so lange anzupassen, bis eine Abbruchbedingung erreicht ist.

Weitere Aspekte der Erfindung betreffen ein Computerprogramm und ein Speichermedium, welche Anweisungen aufweisen, die, wenn sie von einem Computer ausgeführt werden, diesen dazu veranlassen, ein erfindungsgemäßes Verfahren auszuführen.

Eine Straßenmessung im Sinne der Erfindung ist vorzugsweise eine Feldmessung, d.h. eine Messung, welche in einem realen Fahrbetrieb des Fahrzeugs stattfindet. Als Reifen wird der Teil, auf welchem das Rad abrollt, bezeichnet. Das Rad bezeichnet die komplette Einheit, bestehend aus Felge und Reifen.

Eine Software-in-the-Loop-Simulation im Sinne der Erfindung ist vorzugsweise eine Simulation, bei welcher ein durch Software beschriebenes Bauteil in einer virtuellen Modellwelt getestet wird.

Ein Traktionsparameter im Sinne der Erfindung stellt vorzugsweise eine Eigenschaft eines Reifens dar. Insbesondere ist ein Traktionsparameter in Reifen eine Eigenschaft, mit der das Verhalten des Reifens bei der Kraftübertragung beschrieben wird. Traktionsparameter sind insbesondere ein Grip, also ein Reibbeiwert, eine Schlupfrate oder ein Schlupfwinkel oder daraus abgeleitete Größen. Als Grip G oder Reibbeiwert wird das Verhältnis von Kraft parallel zur Fahrbahnebene F_{P} zur Kraft senkrecht zur Fahrbahnebene F_{z} angegeben: G = F_{P} / F_{z}. Als Schlupfwinkel wird das Verhältnis von Rollrichtung des Reifens zur Bewegungsrichtung des Reifens bezeichnet. Auch das Verhältnis von Grip zu Schlupfwinkel oder das Verhältnis von Kraft in x-Richtung zu Schlupfwinkel oder das Verhältnis von Kraft in y-Richtung zu Schlupfwinkel sind Beispiele für Traktionsparameter.

Pacejka-Parameter sind eine Sammlung von Reifenmodellparametern, die in der Fahrzeugdynamik eingesetzt werden, um die Kräfte und Momente zu beschreiben, die zwischen Reifen und Fahrbahn auftreten. Sie werden verwendet, um das Verhalten eines Fahrzeugs bei verschiedenen Geschwindigkeiten, Lastzuständen und Fahrbahnoberflächen vorherzusagen. Die Pacejka-Parameter basieren auf empirischen Messungen und sind geeignet, um das Verhalten von Fahrzeugen zu modellieren. Die mathematische Gleichung, mit der die Kräfte und Momente beschrieben werden, die zwischen Reifen und Fahrbahn auftreten, wird als Magische Formel oder als Pacejka-Formel bezeichnet und wurde von dem niederländischen Ingenieur Hans B. Pacejka entwickelt. Pacejka-Parameter beschreiben zum Beispiel Eigenschaften wie Reifensteifigkeit, Reibungskoeffizienten und Reifenform, um das Verhalten des Reifens zu modellieren.

Die Pacejka-Parameter unterscheiden sich von Reifen zu Reifen. Ein Reifendatensatz enthält eine Mehrzahl von zu einem Reifen oder einem Reifensatz zugehörigen Pacejka-Parametern. Es gibt verschiedene Sets von Pacejka-Parametern, die je nach Anwendung variieren können. Die Anzahl der Pacejka-Parameter kann daher für unterschiedliche Reifendatensätze variieren. Im einfachsten Fall der Pacejka-Formel umfassen die Pacejka-Parameter nur sechs verschiedene Werte. Die beständig weiterentwickelte Pacejka-Formel weist in ihrer aktuellen Form über 100 Parameter auf. Die Reifendatensätze haben vorzugsweise ebenfalls eine solch hohe Anzahl an Parametern. Während ältere Pacejka-Formeln grundsätzlich nur den statischen Fall, also nur statisches, konstantes Schlupfverhalten im stationären Bereich abgebildet haben, sind die neuesten Weiterentwicklungen der Pacejka-Formel auch dazu in der Lage, dynamische Reifeneigenschaften abzubilden.

Das Verfahren dient nicht ausschließlich als zur Erzeugung eines virtuellen Prototyps, sondern kann gleichwertig insbesondere auch als indirektes Messverfahren zur indirekten Messung von Pacejka-Parametern beschrieben werden. Der physikalische Zustand eines Reifens wird durch messbare physikalische Eigenschaften eines Objekts zu einem bestimmten Zeitpunkt definiert. Erfindungsgemäß wird ein Verfahren beschrieben, in dem eine Simulation unter Verwendung realer Messdaten eines Fahrzeugs, insbesondere Geschwindigkeit, Beschleunigung, Drehrate, Drehzahl und Drehmoment des Reifens, durchgeführt wird. Diese Daten dienen als Eingabe, und die Simulation ermittelt Pacejka-Parameter des Reifenmodells als Ausgabe.

Die Pacejka-Parameter beschreiben physikalische Eigenschaften des Reifens. Beispielsweise beschreibt der Pacejka-Parameter A die laterale Steifigkeit, die beschreibt wie der Reifen auf seitliche Kräfte reagiert, der Pacejka-Parameter B den lateralen Spitzenfaktor, der den Grad der Nichtlinearität der Seitenkraft in Abhängigkeit vom Schräglaufwinkel angibt oder der Pacejka-Parameter C den lateralen Formfaktor, der beeinflusst, wie die Form der Seitenlaufkurve verläuft. Entsprechende physikalische Zusammenhänge bestehen für alle anderen Pacejka-Parameter.

Das beanspruchte Verfahren nutzt somit Messungen eines realen Gegenstands als Eingabe, liefert den physikalischen Zustands eines real existierenden Objekts und trägt durch jeden seiner Schritte zur technischen Realisierung des Verfahrens bei.

Als digitaler Zwilling des Fahrzeugs wird eine digitale Repräsentanz des materiellen Fahrzeugs aus der realen Welt in der digitalen Welt verstanden. Es ist unerheblich, ob das Fahrzeug in der realen Welt bereits existiert oder zukünftig erst existieren wird. Der Digitale Zwilling ermöglicht einen übergreifenden Datenaustausch und besteht aus Modellen der einzelnen Elemente des Fahrzeugs und kann daneben Simulationen, Algorithmen und Services enthalten, die Eigenschaften oder Verhalten des Fahrzeugs beschreiben.

Als Last-Event wird ein zeitlich eingrenzbares Ereignis beschrieben, bei dem zumindest die Reifen des Fahrzeugs einer Last ausgesetzt sind, die sich von der Last des stehenden oder unbeschleunigt fahrenden Fahrzeugs unterscheidet. Das Last-Event kann beispielsweise ein Beschleunigungsmanöver wie beispielsweise eine Volllastbeschleunigung, ein Bremsmanöver wie beispielsweise eine Volllastverzögerung, eine Kurvenfahrt mit konstantem oder veränderlichem Radius oder ein anderes Fahrmanöver sein oder umfassen.

Wird in Schritt S4 ein gemessener Traktionsparameter von wenigstens einem der Räder ermittelt, kann dies bedeuten, dass der Traktionsparameter eines Rades ermittelt wird oder auch, dass die Traktionsparameter mehrerer Räder ermittelt werden oder auch, dass ein einzelner Traktionsparameter von einer Kombination von Rädern, beispielsweise von zwei an der gleichen Achse angeordneten Räder ermittelt wird. Insbesondere ist vorgesehen, dass in Schritt S4 ein gemessener Traktionsparameter von wenigstens einem der Reifen ermittelt wird. Der Reifen ist der für diesen Schritt wesentliche Teil des Rades. Entsprechendes gilt für das Ausgeben des simulierten Traktionsparameter in Schritt S5. Für den gemessenen Traktionsparameter und den simulierten Traktionsparameter wird der gleiche Parameter verwendet, also beispielsweise das Verhältnis von Grip zu Schlupfverhältnis, beide unterscheiden sich aber in ihren konkreten gemessenen bzw. simulierten Werten.

Für die Ermittlung der gemessenen Werte des Traktionsparameters während der Messfahrt wird insbesondere eine IMU (Inertial Measurement Unit, Inertialmesseinheit) verwendet, welche ein Gyroskop aufweist, mit der die Drehrate des Fahrzeugs in drei Achsen ermittelt werden kann, ferner einen Beschleunigungsmesser aufweist, mit dem die Beschleunigung des Fahrzeugs in drei Richtungen ermittelt werden kann und ferner ein GPS-System aufweist, mit dem die Position des Fahrzeugs in drei Dimensionen ermittelt werden kann. Hierbei sind jedoch zumindest die Messungen der Geschwindigkeit in z-Richtung, der Beschleunigung in z-Richtung und der Drehrate des Fahrzeugs in z-Richtung, also jeweils senkrecht zur Fahrbahn, optional. Weitere Messgrößen der Messfahrt sind die Raddrehzahlen und die Drehmomente der Räder.

Weitere Vorteile werden erzielt, wenn in Schritt S4) ein gemessener Wert eines Traktionsparameters von wenigstens einem der Räder durch Messung einer Geschwindigkeit, einer Beschleunigung und einer Drehrate des Fahrzeugs parallel zur Fahrbahn, sowie einer Drehzahl und eines Drehmoments des Reifens ermittelt wird. In einer besonderen Ausführungsform der Erfindung werden alle in Zusammenhang mit Rädern durchgeführten Schritte des Verfahrens in Zusammenhang mit Reifen durchgeführt.

Vorzugsweise werden nicht jeweils einzelne Werte eines Traktionsparameter des gemessenen oder simulierten, sondern stattdessen jeweils mehrere Werte des gemessenen Traktionsparameter ermittelt bzw. des simulierten Traktionsparameters ausgegeben. Dies bedeutet für die Werte des gemessen Traktionsparameters, dass eine Anzahl von während dem Last-Event gemessenen Traktionsparametern ermittelt werden. Für die Werte des simulierten Traktionsparameters bedeutet dies, dass eine Anzahl von Werten des über das Last-Event simulierten Traktionsparameters als Zielgröße ausgegeben werden.

Hierdurch kann die Genauigkeit der Anpassung der modellierten Pacejka-Parameter erhöht werden.

Das Anpassen des Reifendatensatzes in Schritt S7 kann durch einen vollständigen Austausch des Reifendatensatzes und/oder durch eine Anpassung einzelner Pacejka-Parameter im Reifendatensatz erfolgen. Das Ziel dieses Schritts, um den simulierten Traktionsparameter dem berechneten Traktionsparameter anzugleichen, kann zielgerichtet oder nicht-zielgerichtet erfolgen. Insbesondere ist das Anpassen in Schritt S7 der Schleife derart vorgesehen, dass ein Simulieren des Last-Events mit dem Fahrzeugmodell mit jedem der Reifendatensätze der Reifendatenbank durchgeführt wird.

Als Abbruchbedingung kann insbesondere auch eine Anzahl von Wiederholungen der Schritte S5 bis S7 oder das Erreichen der letzten Simulation beim Simulieren von allen in der Reifendatenbank verfügbaren Reifendatensätzen vorgesehen sein.

In Schritt S8 werden insbesondere diejenigen Pacejka-Parameter ausgegeben, die ein optimales Ergebnis des Vergleichs in Schritt S6 gezeigt haben und/oder bei denen die Abbruchbedingung erreicht wurde. Das Ausgeben der Werte der Pacejka-Parameter des Reifenmodells ist gleichbedeutend mit der Auswahl von Parametern für das Reifenmodell. Die Werte der Pacejka-Parameter werden somit für das Reifenmodell ausgewählt. Mit der Ausgabe ist somit ein Virtueller Prototyp eines mehrere Räder aufweisenden Fahrzeugs erzeugt worden.

Die Erfindung beruht auf dem Ansatz, Pacejka-Parameter der Reifen des Fahrzeugs durch ein iteratives Simulationsverfahren für einen virtuellen Prototyp bestimmen zu können. Auf diese Weise kann das Fahrverhalten der Reifen des Fahrzeugs simuliert werden, ohne dass hierfür weitere Testfahrten mit einem Testfahrzeug erforderlich sind. Die Fahrzeugmodell-Erstellung kann im Hinblick auf die Reifen auf diese Weise mit wenig Aufwand, in kurzer Zeit und mit hoher belegbarer Qualität erfolgen. Dabei kann das Verhalten der Traktion, also des Grips der Reifen in Abhängigkeit des Reifentyps besonders zutreffend simuliert werden. Durch das erfindungsgemäße Verfahren kann eine automatische Erstellung des Fahrzeugmodells aufgrund der Messdaten aus Straßenmessungen erfolgen.

Vorzugsweise ist bei dem Verfahren gemäß dem ersten Aspekt vorgesehen, dass der Traktionsparameter einen Grip, und/oder eine Schlupf-Rate und/oder einen Schlupfwinkel umfasst.

Als Grip wird das Verhältnis der auf den Reifen wirkenden Kraft parallel zur Fahrbahn zur Kraft senkrecht zur Fahrbahn verstanden. Die Schlupfrate ist das Verhältnis zwischen der Geschwindigkeit, mit der sich ein Reifen auf der Straße bewegt, und der Geschwindigkeit, mit der das Fahrzeug insgesamt vorwärts oder rückwärts bewegt wird. Wenn die Schlupfrate hoch ist, dreht sich der Reifen schneller als das Fahrzeug. Der Schlupfwinkel bezeichnet den Winkel zwischen der Richtung der Raddrehung und der Richtung, in die das Rad bewegt wird. Insbesondere können auch Traktionsparameter vorgesehen sein, die aus diesen Größen abgeleitet sind.

Weitere Vorteile werden erzielt, wenn die Schritte S4 bis S8 für jedes der Räder, insbesondere für jedes der angetriebenen Räder durchgeführt werden.

Explizit bedeutet dies, dass in Schritt S4 ein gemessener Traktionsparameter von jedem der Räder, insbesondere von jedem der angetriebenen Räder ermittelt wird. Für Schritt S5 bedeutet dies, dass wenigstens ein simulierter Traktionsparameter von jedem der Räder, insbesondere von jedem der angetriebenen Räder, als Zielgröße ausgegeben wird. Für Schritt S6 bedeutet dies, dass der Wert des in Arbeitsschritt S4 gemessenen Traktionsparameters mit dem Wert des in Arbeitsschritt S5 simulierten Traktionsparameter jedes der Räder separat miteinander verglichen wird.

Ein für manche Zielvorgaben guter Kompromiss zwischen Genauigkeit und Aufwand ist, wenn im Fall, dass das Last-Event eine Beschleunigung, insbesondere eine Volllastbeschleunigung ist, den gemessenen Traktionsparameter ausschließlich von jedem der angetriebenen Räder zu ermitteln und den simulierten Traktionsparameter ausschließlich von jedem der angetriebenen Räder als Zielgröße auszugeben.

Bei der zuletzt beschriebenen besonderen Ausführungsform der Erfindung kann vorzugsweise vorgesehen sein, dass die Anpassungsgüte mit der Methode der kleinsten Fehlerquadrate berechnet wird.

Bei der Methode der kleinsten Fehlerquadrate wird die Menge von Datenpunkten des simulierten Traktionsparameters möglichst nahe an die Menge von Datenpunkten des gemessenen Traktionsparameters angepasst. Demnach werden in dieser besonderen Ausführungsform der Erfindung in Schritt S4 mehrere Werte eines gemessenen Traktionsparameters von einem der Räder ermittelt und in Schritt S5 mehrere Werte eines simulierten Traktionsparameters wenigstens eines der Reifen als Zielgröße ausgegeben.

**In** einer weiteren vorteilhaften Ausführungsform umfasst das Verfahren ferner den Schritt: Anpassen einer Fahrzeugsteuerung auf Grundlage der in Schritt S8 ausgegebenen Werte.

**In** einer weiteren vorteilhaften Ausgestaltung umfasst das Verfahren ferner den Schritt: Steuern und/oder Regeln des Fahrzeugs auf Grundlage der in Schritt S8 ausgegebenen Werte.

Die ausgegebenen Werte der Pacejka-Parameter können in dem Fahrzeug als Steuerungsparameter dienen oder im Fahrzeug Steuerungsparameter beeinflussen. Hierdurch lassen sich Fahrzeugfunktionen einstellen, die einen besonders effizienten Betrieb des Fahrzeugs ermöglichen.

Weiter vorzugsweise ist vorgesehen, dass die Radaufhängung des Fahrzeugs im Fahrzeugmodell berücksichtigt wird.

Die Radaufhängung ist eine Komponente im Fahrzeug, die das Rad mit dem Fahrgestell oder der Karosserie verbindet und die Aufgabe hat, die vertikale, laterale und horizontale Bewegung des Rades zu kontrollieren. Die Radaufhängung besteht aus verschiedenen Teilen, wie Federungselementen, Dämpfern, Querlenkern und Achsen, und dient dazu eine stabile und kontrollierte Fahrt zu ermöglichen, indem sie die Unebenheiten der Fahrbahn ausgleicht und das Rad in Kontakt mit der Straße hält. Die Radaufhängung hat einen direkten Einfluss auf den Grip des Reifens, da sie die Kontaktfläche und den Winkel zwischen dem Reifen und der Straße beeinflusst. Eine korrekt abgestimmte Radaufhängung kann den Kontakt zwischen dem Reifen und der Straße maximieren und den Grip verbessern, indem sie den Reifen in einer optimalen Position hält, um Längs- und Querkraft auf die Straße zu übertragen.

Die Berücksichtigung der Radaufhängung im Fahrzeugmodell ermöglicht eine weiter optimierte Erzeugung des virtuellen Prototyps des Fahrzeugs.

Vorzugsweise ist vorgesehen, dass ferner der Straßenbelag in Schritt S5 berücksichtigt wird.

Weitere Vorteile werden erreicht, wenn das Last-Event eine Beschleunigung aufweist. Die Beschleunigung kann insbesondere eine Vollastbeschleunigung sein.

In einer weiteren besonderen Ausführungsform der Erfindung ist vorgesehen, dass das Last-Event eine Verzögerung aufweist. Die Verzögerung kann insbesondere eine Vollastverzögerung sein.

Besonders bevorzugt ist vorgesehen, dass das Last-Event eine Kurvenfahrt mit konstantem Radius und steigender Geschwindigkeit aufweist.

Ferner werden Vorteile erreicht, wenn die Abbruchbedingung das Erreichen eines, insbesondere lokalen oder absoluten, Minimums einer Abweichung zwischen dem gemessenen Wert des Traktionsparameters und dem simulierten Wert des Traktionsparameter ist.

Weiter bevorzugt ist vorgesehen, dass für das Ermitteln des gemessenen Werts des Traktionsparameters in Schritt S4 die Messgrößen Fahrzeuggeschwindigkeit, Fahrzeugbeschleunigung, Fahrzeugdrehrate, Raddrehzahlen und Raddrehmomente erfasst werden.

In einer weiteren bevorzugten Ausführungsform der Erfindung ist vorgesehen, dass das Anpassen des Reifendatensatzes in Schritt S7 ein Auswählen eines Reifendatensatzes für das Reifenmodell aus der Reifendatenbank umfasst.

Hierdurch können insbesondere alle Pacejka-Parameter gleichzeitig verändert werden. Diese Veränderung ermöglicht tendenziell eine grobe Optimierung der Simulationsgüte.

In einer weiteren vorteilhaften Ausführungsform der Erfindung ist vorgesehen, dass das Anpassen des Reifendatensatzes in Schritt S7 ein Anpassen einzelner Pacejka-Parameter des ausgewählten Reifendatensatzes umfasst.

Hierdurch lässt sich eine besonders genaue Optimierung der Simulationsgüte erreichen. Insbesondere ist es auch möglich, die Anpassung einzelner Werte des ausgewählten Reifendatensatzes im Anschluss an eine Optimierung über ein Auswählen eines Reifendatensatzes durchzuführen.

Weitere Vorteile werden erzielt, wenn im Fahrzeugmodell ein Gewicht des Fahrzeugs, ein Radstand, eine Spurweite, ein Schwerpunkt des Fahrzeugs und eine Lenkübersetzung berücksichtigt werden.

Bei dem System gemäß dem vierten Aspekt der Erfindung kann vorzugsweise vorgesehen sein, dass die Mittel ferner umfassen: Mittel zum Berechnen wenigstens eines Werts für eine Querkraft des Reifens auf der Grundlage von während einer Messfahrt aufgenommenen Werten von Messgrößen.

Darüber hinaus kann der Begriff "umfassen" in besonderen Ausführungsformen der Erfindung auch "sein" bedeuten.

Weitere Merkmale und Vorteile ergeben sich aus der Beschreibung in Bezug auf die Figuren. Es zeigen wenigstens teilweise schematisch:
- **Figur 1**: ein Ausführungsbeispiel eines Verfahrens zum Erzeugen eines virtuellen Prototyps eines Fahrzeugs;
- **Figur 2**: eine Auftragung von gemessenen simulierten Werten von Traktionsparametern eines nicht angepassten Reifendatensatzes;
- **Figur 3**: eine Auftragung von aneinander angepassten gemessenen und simulierten Werten von Traktionsparametern des Reifendatensatzes von Fig. 2; und
- **Figur 4**: ein Ausführungsbeispiel eines Systems zum Erzeugen eines virtuellen Prototyps eines Fahrzeugs.

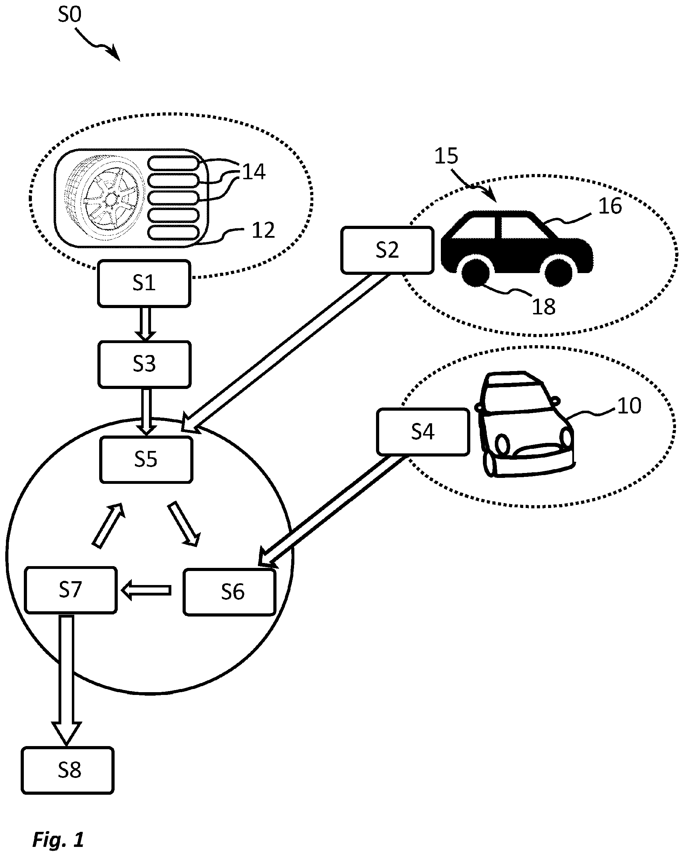

Figur 1 zeigt ein Ausführungsbeispiel eines Verfahrens S0 zum Erzeugen eines virtuellen Prototyps eines Fahrzeugs 10 auf der Grundlage von Daten aus Straßenmessungen.

**In** Schritt S1 wird eine Reifendatenbank 12 bereitgestellt, die mehrere Reifendatensätze 14 mit Pacejka-Parametern umfasst.

**In** Schritt S2 wird ein Fahrzeugmodell 15 bereitgestellt, umfassend einen digitalen Zwilling 16 des Fahrzeugs und ein über einen Reifendatensatz 14 anpassbares Reifenmodell 18.

**In** Schritt S4 wird eine Messfahrt mit dem Fahrzeug 10 durchgeführt, wobei die Messfahrt ein Last-Event umfasst und während des Last-Events Werte eines Traktionsparameters von mehreren Reifen ermittelt wird. Die Ermittlung der Werte erfolgt über Messungen und Rechenschritte. Die Werte werden als "gemessene Werte" des Traktionsparameters bezeichnet. Das Last-Event ist eine Beschleunigung. Der Traktionsparameter ist das Verhältnis der auf beide Reifen der angetriebenen Achse wirkenden Kraft zum auf beide Reifen der angetriebenen Achse wirkenden Schlupf. Hierzu werden die beiden Reifen der angetriebenen Achse zusammengefasst. Das Erfassen der Messwerte kann zum einen über eine Datenschnittstelle erfolgen, aber auch direkt durch deren Sensoren während der Messfahrt ausgeführt werden.

Die Schritte S1, S2 und S4 sind in ihrer Reihenfolge unabhängig voneinander. Schritt S3 bedarf notwendigerweise eine Reifendatenbank 12 und ein Reifenmodell 18. Daher wird Schritt S3 im Anschluss an die Schritte S1 und S2 durchgeführt.

Für die Straßenmessung werden Messfahren mit einem Fahrzeug 10 auf Fahrwegen, insbesondere Straßen, durchgeführt. Hierzu ist das Fahrzeug 10 mit Messgeräten und Sensoren ausgestattet. Insbesondere weist das Fahrzeug 10 eine Initialmesseinheit IMU zur Messung der Drehrate in drei Achsen, die Messung der Beschleunigung in drei Richtungen und zur Messung der Position des Fahrzeugs in drei Dimensionen auf. Ferner werden bei der Messfahrt die Raddrehzahlen, die Geschwindigkeit des Fahrzeugs in Längs- und Querrichtung, die Drehrate des Fahrzeugs in Längs- und Querrichtung und das auf jeden der Reifen wirkende Drehmoment ermittelt. Ferner werden für die Straßenmessung die folgenden Fahrzeugparameter vorausgesetzt: das statische Gewicht des Fahrzeugs, der Radstand, die Spurbreite, der Schwerpunkt in drei Dimensionen und die Lenkübersetzung, also das Verhältnis der Lenkraddrehung zur Drehung der Räder am Boden. Weitere optionale Messgrößen sind die Geschwindigkeit, Beschleunigung und Drehrate des Fahrzeugs in Richtung vertikal zur Fahrbahn.

Im Anschluss an die Schritte S1 bis S4 wird in Schritt S5 das Last-Event, das bei der Messfahrt mit dem Fahrzeug 10 durchgeführt wurde, mit dem Fahrzeugmodell simuliert. Hierbei werden simulierte Werte des Traktionsparameters 24 von wenigstens einem der Reifen, als Zielgröße ausgegeben.

Im Fahrzeugmodell wird das Gewicht des Fahrzeugs, dessen Radstand, dessen Spurweite, der Schwerpunkt des Fahrzeugs und die Lenkübersetzung berücksichtigt. Ferner berücksichtigt das Fahrzeugmodell ebenfalls eine Radaufhängung. Alle diese genannten Parameter haben einen Einfluss auf den Schlupf und die in verschiedene Richtungen wirkenden Kräfte auf die Räder und werden im Fahrzeugmodell abgebildet.

In den Schritten S4 und S5 wird somit derselbe Parameter einmal als gemessener Wert einer Messfahrt ermittelt und einmal als simulierter Wert einer Simulation bestimmt. Die simulierten Werte des Traktionsparameters 24 sind somit direkt mit den gemessenen Werten des Traktionsparameters 22 vergleichbar.

Im Anschluss an Arbeitsschritt S5 wird in Arbeitsschritt S6 der in Arbeitsschritt S4 gemessene Wert des Traktionsparameters 22 mit dem in Arbeitsschritt S5 simulierten Wert des Traktionsparameters 24 verglichen.

Für den Vergleich wird eine Anpassungsgüte berechnet. Die Berechnung erfolgt über die Methode der kleinsten Fehlerquadrate.

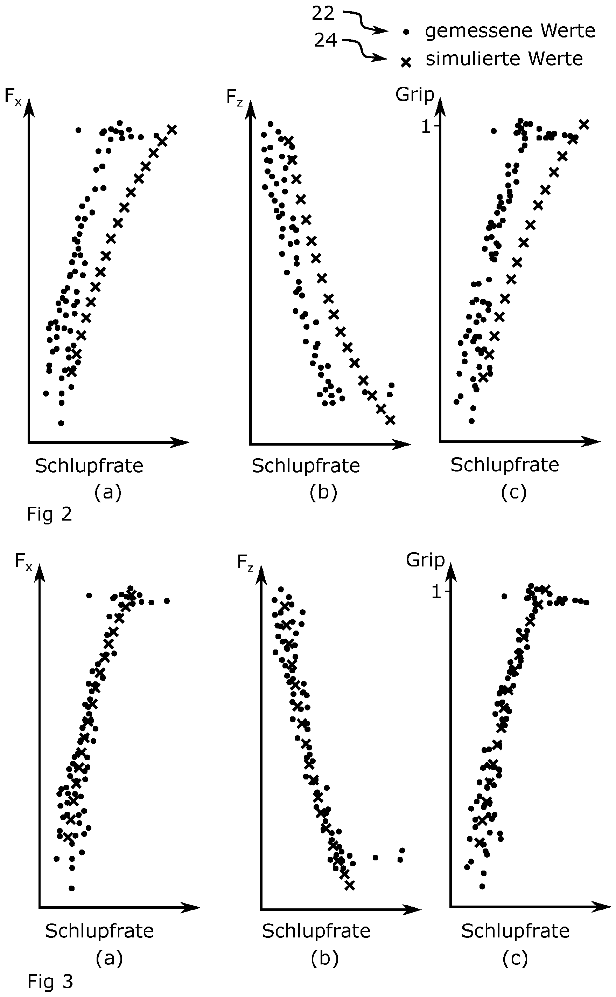

Weitere Details zum Vergleich sind in Zusammenhang mit Figur 2 beschrieben.

Schritt S7 wird der Reifendatensatz angepasst, um die simulierten Werte des Traktionsparameters 24 den gemessenen Werten des Traktionsparameters 22 durch Veränderung der Werte der Pacejka-Parameter des Reifenmodells anzugleichen. Hierzu wird zunächst ein anderer Reifendatensatz für das Reifenmodell aus der Reifendatenbank ausgewählt. Mit diesem neuen Reifendatensatz werden die Schritte S5 und S6, also das Simulieren des Lastevents mit dem Fahrzeugmodell und das Vergleichen der daraus erhaltenen simulierten Werte des Traktionsparameters 24 mit den in Arbeitsschritt S4 ermittelten gemessenen Werten des Traktionsparameters 22, wiederholt. Der Arbeitsschritt S4, also das Durchführen einer Messfahrt mit dem Fahrzeug 10 wird hierzu nicht wiederholt. Es wird auf die bei der einmaligen Durchführung der Messfahrt gewonnen Messwerte zurückgegriffen.

Die Arbeitsschritte S5 bis S7 werden wiederholt, bis eine Abbruchbedingung erreicht wird. In einem ersten gewählten Beispiel ist die Abbruchbedingung erreicht, sobald alle in der Reifendatenbank 12 vorhandenen Reifendatensätze 14 dazu genutzt wurden, das Last-Event mit dem Fahrzeugmodell zu simulieren und die aus dieser Simulation ermittelten simulierten Werte der Traktionsparameter 24 mit den gemessenen Werten der Traktionsparametern 22 verglichen wurden.

Bei jedem der Vergleiche wird eine Anpassungsgüte ermittelt. Die Ermittlung erfolgt mit der Methode der kleinsten Fehlerquadrate. Anschließend wird derjenige Reifendatensatz ausgewählt, bei dem die Anpassungsgüte am höchsten ist.

Das Verfahren kann an dieser Stelle abgeschlossen sein, indem in Schritt S8 die ausgegebenen Pacejka-Parameter den Reifendatensatz des Reifenmodells 18 des Fahrzeugmodells bilden. Auf diese Weise ist die Erzeugung des virtuellen Prototyps des Fahrzeugs 10 abgeschlossen.

Alternativ oder zusätzlich kann jedoch auch vorgesehen sein, dass, vor Ausgabe der Werte der Pacejka-Parameter die Arbeitsschritte S5 bis S7 weiter wiederholt werden, indem bei demjenigen Reifendatensatz 14, bei dem die Anpassungsgüte am höchsten ist, ein oder mehrere einzelne Werte der Pacejka-Parameter weiter angepasst werden. Mit den angepassten Pacejka-Parametern werden wiederum die Schritte S5 und S6 durchgeführt, um eine weitere Optimierung der Anpassung der simulierten Traktionsparameter an die gemessenen Traktionsparameter durchzuführen. Auch diese Anpassungen können in den Arbeitsschritten S5 bis S7 so oft wiederholt werden, bis eine Abbruchbedingung erreicht wird.

Diese Abbruchbedingung wird insbesondere durch ein Optimierungsproblem vorgegeben. Vorzugsweise kann eine solche Abbruchbedingung das Erreichen eines insbesondere lokalen oder absoluten, Minimums einer Abweichung zwischen dem gemessenen Wert des Traktionsparameters 22 und dem simulierten Wert des Traktionsparameters 24 sein.

Des Weiteren kann eine Abbruchbedingung ein Erreichen eines Grenzwertes des simulierten Werts des Traktionsparameters 24 sein, insbesondere dann, wenn sich der simulierte Wert des Traktionsparameters 24 nur noch infinitesimal verändert.

Während der Messfahrt können dabei alternativ, ebenfalls in Abhängigkeit des zu bestimmenden Traktionsparameters, beispielsweise folgende Fahrmanöver durchgeführt werden:
Tipln, TipOut, Volllastbeschleunigung, Teillastbeschleunigung, Bergauffahrt, Bergabfahrt.

Figur 2 zeigt eine Auftragung von gemessenen und simulierten Werten von Traktionsparametern eines nicht an die Messwerte angepassten Reifendatensatzes 14. Die gemessenen Werte des Traktionsparameters 22 sind mit Punkten dargestellt. Die simulierten Werte des Traktionsparameters 24 sind mit Kreuzen markiert. In Figur 2a ist der Traktionsparameter Kraft in x-Richtung, also einer Kraft in Fahrtrichtung gegen den Traktionsparameter Schlupfrate aufgetragen. Die Messwerte sind mit dem Fahrzeug während eines Last-Events einer Messfahrt aufgenommen worden. Die gemessenen Traktionsparameter sind eine Kraft in x-Richtung, eine Kraft in z-Richtung und ein Grip. Die Kraft in x-Richtung und die Kraft in z-Richtung ist jeweils die auf beide Räder der angetriebenen vorderen Achse wirkende Kraft. Die gemessenen Werte werden durch die Messungen der Position, Geschwindigkeit und Rotation des Fahrzeugs in mehreren Richtungen ermittelt, wobei die Werte des Gewichts des Fahrzeugs 10, dessen Radstand, Spurweite, Schwerpunkt und Lenkübersetzung als Eingangsgrößen in die Berechnung eingehen.

In Figur 2a ist die Kraft in Längsrichtung auf das Reifenpaar über der Schlupfrate aufgetragen.

Die Schlupfrate S ist dabei gegeben durch S= (Ω*R_{C})/v-1.
wobei Ω die Winkelgeschwindigkeit des Rades bezeichnet, Rc der effektive Radius des frei rollenden Reifens ist, der aus der Gesamtanzahl der Radumdrehungen pro Kilometer errechnet werden kann. Die Größe v bezeichnet die Vorwärtsgeschwindigkeit des Fahrzeugs.

Die Schlupfrate gibt an, wie stark das Rad im Verhältnis zur Geschwindigkeit des Fahrzeugs 10 durchdreht oder sich langsamer dreht. Eine Schlupfrate von 0 bedeutet, dass das Rad nicht rutscht und sich mit derselben Geschwindigkeit wie das Fahrzeug 10 dreht, während eine Schlupfrate von 1 bedeutet, dass sich das Rad doppelt so schnell dreht, wie sich der Untergrund fortbewegt.

Für die gemessenen Werte in Figur 2a ist zu sehen, dass die Kraft in Längsrichtung Fₓ mit steigender Schlupfrate ansteigt. Die Kraft in z-Richtung fällt dagegen mit steigender Schlupfrate ab. Das Verhältnis dieser beiden Größen entspricht dem in Figur 2c aufgetragenen Grip, der ebenfalls mit steigender Schlupfrate ansteigt. Neben den gemessenen sind auch die simulierten Werte der Kräfte in x-Richtung und in z-Richtung und des Grips sind für den ersten Reifendatensatz in den Figuren 2a, 2b und 2c ebenfalls aufgetragen.

In dem gewählten Beispiel ist zu erkennen, dass die gemessene Kraft in x-Richtung und der Grip grundsätzlich höher ist als die simulierte Kraft in x-Richtung bzw. der simulierte Grip. Umgekehrt verhält es sich für die Kraft in z-Richtung.

In den Figuren 3a-c sind die identischen gemessenen Werte der Traktionsparameter 22 Fₓ F_{z} und Grip gegenüber der Schlupfrate aufgetragen. Die simulierten Werte der Traktionsparameter sind mit einem anderen, angepassten Reifendatensatz erstellt worden. Die dargestellten simulierten Werte der Traktionsparameter 24 sind in gleicher Weise wie in Figur 2, durch eine Simulation des Last-Events mit dem Fahrzeugmodell erstellt worden. Es ist zu erkennen, dass die Abweichung zwischen den gemessenen Werten des Traktionsparameters 22 und den simulierten Werten des Traktionsparameters 24 gegenüber dem in Fig. 2 gezeigten Beispiel deutlich geringer ist. Die simulierten Werte aller drei Traktionsparameter liegen mittig in der Streuung der gemessenen Werte der Traktionsparameter 22 über den gesamten Bereich der gemessenen Schlupfrate hinweg. Bei Erreichen einer derartigen Übereinstimmung zwischen den Werten der gemessenen Traktionsparameter und den Werten der simulierten Traktionsparametern kann ein Schwellwert einer Anpassungsgüte erreicht sein. Dies entspricht dem Erreichen einer Abbruchbedingung. Anschließend an das Erreichen der Abbruchbedingung werden die am besten angepassten Werte der Pacejka-Parameter des Reifenmodells, also der für diese Simulation verwendete Reifendatensatz, ausgegeben. Mit der Ausgabe wird der virtuelle Prototyp des Fahrzeugs 10 erstellt. Durch die vorhergehenden Schritte des Verfahrens ist sichergestellt, dass das Reifenmodell des virtuellen Prototyps dem realen Fahrzeug 10 entspricht.

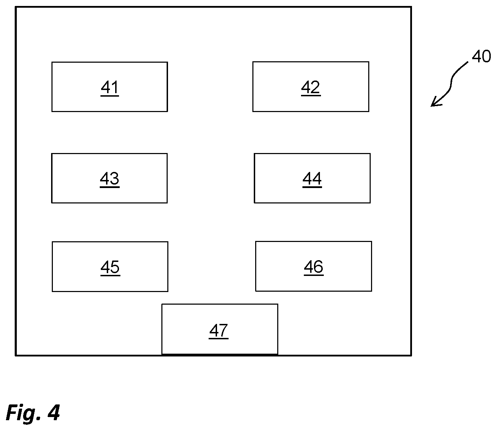

Figur 4 zeigt ein Ausführungsbeispiel eines Systems 40 zum Erzeugen eines virtuellen Prototyps eines Fahrzeugs 10 auf der Grundlage von Daten aus Straßenmessungen, welches Mittel 41, 42, 43, 44 und 45 zum Parametrieren des eines Reifenmodells 18 des virtuellen Prototyps aufweist. Die Mittel 41, 42, 43, 44 und 45 zum Parametrieren sind hierbei, eingerichtet durch kaskadierte Software-in-the-Loop-Simulation, auf der Grundlage von Messwerten der Straßenmessung, Werte der Pacejka-Parameter des Reifenmodells 18 in Simulationsschleifen zu ermitteln. In den Simulationsschleifen werden Parameter des Reifenmodells 18 derart optimiert, dass iterativ nacheinander simulierte Werte der Traktionsparameter 24 mit den durch Straßenmessung ermittelten gemessenen Werten der Traktionsparametern 22 abgeglichen.

Insbesondere ist das System 40 dazu eingerichtet, ein Verfahren gemäß Figur 1 auszuführen. Vorzugsweise, aber nicht abschließend, weist das System 40 hierfür Mittel 41 zum Berechnen wenigstens eines Werts für eine Längskraft eines Reifens auf der Grundlage von während einer Messfahrt aufgenommenen Werten von Messgrößen auf.

Darüber hinaus weist das System 40 vorzugsweise Mittel 42 zum Berechnen wenigstens eines Werts für eine Querkraft des Reifens auf der Grundlage von während einer Messfahrt aufgenommenen Werten von Messgrößen.

Weiter vorzugsweise weist das System 40 Mittel 43 zum Berechnen wenigstens eines Werts für eine Schlupfrate des Reifens auf der Grundlage von während einer Messfahrt aufgenommenen Werten von Messgrößen auf

Weiter vorzugsweise weist das System 40 Mittel 44 zum Simulieren des Fahrzeugs mittels eines Reifenmodells 18 auf, wobei in das Reifenmodell 18 wenigstens die folgenden physikalischen Eigenschaften des Fahrzeugs als Parameter eingehen: Gewicht des Fahrzeugs, Radstand, Spurweite, Schwerpunkt und Lenkübersetzung; wobei wenigstens Werte eines Traktionsparameters als Zielgröße ausgegeben werden.

Weiter vorzugsweise weist das System 40 Mittel 45 zum Vergleichen des wenigstens einen auf der Grundlage der Straßenmessungen ermittelten gemessenen Werts des Traktionsparameters mit den simulierten Werten der Traktionsparameter 24 auf.

Weiter vorzugsweise weist das System 40 Mittel 46 zum Anpassen des Fahrzeugmodells 18 auf, um den simulierten Wert des Traktionsparameters 24 dem gemessenen Wert des Traktionsparameters 22 durch Veränderung der Pacejka-Parameter anzugleichen.

Des Weiteren weist das System 40 vorzugsweise eine Schnittstelle 47 zum Ausgeben von Werten für Pacejka-Parameter des Reifenmodells auf. Die Mittel zum Parametrieren sind vorzugsweise eingerichtet, das Reifenmodell so lange anzupassen, bis eine Abbruchbedingung erreicht ist.

Die Mittel 41, 42, 43, 44 45 und 46 sowie die Schnittstelle 47 des Systems 40 sind vorzugsweise Teil einer Datenverarbeitungsanlage. Vorzugsweise wird das Verfahren S0 von einer solchen Datenverarbeitungsanlage automatisch und/oder computerimplementiert ausgeführt.

Die angegebenen Mittel 41, 42, 43, 44, 45, 46 und die Schnittstelle 47 sind insbesondere auch eingerichtet, mehrere Simulationsschleifen des Verfahrens S0 auszuführen.

Es wird darauf hingewiesen, dass es sich bei den Ausführungsbeispielen lediglich um Beispiele handelt, die den Schutzbereich, die Anwendung und den Aufbau in keiner Weise einschränken sollen. Vielmehr wird dem Fachmann durch die vorausgehende Beschreibung ein Leitfaden für die Umsetzung mindestens eines Ausführungsbeispiels gegeben, wobei diverse Änderungen, insbesondere im Hinblick auf die Funktion oder Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Fahrzeug
- 12: Reifendatenbank
- 14: Reifendatensatz
- 16: digitaler Zwilling
- 18: Reifenmodell
- 22: gemessener Wert eines Traktionsparameters
- 24: simulierter Wert eines Traktionsparameters
- 40: System
- 41: Mittel zum Berechnen wenigstens eines Werts für eine Längskraft eines Reifens
- 42: Mittel zum Berechnen wenigstens eines Werts für eine Querkraft des Reifens
- 43: Mittel zum Berechnen wenigstens eines Werts für eine Schlupfrate des Reifens
- 44: Mittel zum Simulieren des Fahrzeugs mittels eines Reifenmodells
- 45: Mittel zum Vergleichen des wenigstens einen auf der Grundlage der Straßenmessungen berechneten Werts des Traktionsparameters mit den simulierten Werten des Traktionsparameter
- 46: Mittel zum Anpassen des Fahrzeugmodells
- 47: Schnittstelle

- S0: Verfahren

## Patentansprüche

1. Computer-Implementiertes Verfahren (S0) zum Erzeugen eines virtuellen Prototyps, insbesondere zur indirekten Messung von Pacejka-Parametern, eines mehrere Räder aufweisenden Fahrzeugs (10) auf der Grundlage von Daten aus Straßenmessungen, folgende Arbeitsschritte aufweisend:
S1) Bereitstellen einer Reifendatenbank (12), die mehrere Reifendatensätze (14) mit Pacejka-Parametern umfasst;
S2) Bereitstellen eines Fahrzeugmodells, umfassend einen digitalen Zwilling (16) des Fahrzeugs (10) und ein über einen Reifendatensatz (14) anpassbares Reifenmodell (18);
S3) Bereitstellen eines Reifendatensatzes (14) für das Reifenmodell (18) aus der Reifendatenbank (12);
S4) Durchführen einer Messfahrt mit dem Fahrzeug (10), wobei die Messfahrt ein Last-Event umfasst und während des Last-Events ein gemessener Wert eines Traktionsparameters (22) von wenigstens einem der Reifen ermittelt wird;
S5) Simulieren des Last-Events mit dem Fahrzeugmodell, wobei wenigstens ein simulierter Wert des Traktionsparameters (24) von wenigstens einem der Reifen, als Zielgröße ausgegeben wird;
S6) Vergleichen des in Arbeitsschritt S4 gemessenen Werts des Traktionsparameters (22) mit dem in Arbeitsschritt S5 simulierten Werts des Traktionsparameters (24);
S7) Anpassen des Reifendatensatzes (14), um den simulierten Wert des Traktionsparameters (24) dem gemessenen Wert des Traktionsparameters (22) durch Veränderung der Werte der Pacejka-Parameter anzugleichen; wobei
die Arbeitsschritte S5 bis S7 wiederholt werden, bis eine Abbruchbedingung erreicht wird; und anschließend
S8) Ausgeben der Werte der Pacejka-Parameter des Reifenmodells (18).

2. Verfahren nach Anspruch 1, wobei in Schritt S4) ein gemessener Wert eines Traktionsparameters (22) von wenigstens einem der Räder durch Messung einer Geschwindigkeit, einer Beschleunigung und einer Drehrate des Fahrzeugs parallel zur Fahrbahn, sowie einer Drehzahl und eines Drehmoments des Rades ermittelt wird.

3. Verfahren (S0) nach Anspruch 1 oder 2, wobei der Traktionsparameter einen Grip, und/oder eine Schlupf-Rate und/oder einen Schlupfwinkel umfasst.

4. Verfahren (S0) nach einem der vorhergehenden Ansprüche, wobei die Schritte S4 bis S8 für jedes der angetriebenen Räder durchgeführt werden.

5. Verfahren (S0) nach einem der vorhergehenden Ansprüche, wobei die Abbruchbedingung ein Erreichen eines Schwellwerts einer Anpassungsgüte umfasst.

6. Verfahren (S0) nach Anspruch 5, wobei die Anpassungsgüte mit der Methode der kleinsten Fehlerquadrate berechnet wird.

7. Verfahren (S0) nach einem der vorhergehenden Ansprüche, ferner umfassend den Schritt: Steuern und/oder Regeln des Fahrzeugs (10) auf Grundlage der in Schritt S8 ausgegebenen Werte.

8. Verfahren (S0) nach einem der vorhergehenden Ansprüche, wobei die Radaufhängung des Fahrzeugs (10) im Fahrzeugmodell berücksichtigt wird.

9. Verfahren nach einem der vorhergehenden Ansprüche, wobei ferner der Straßenbelag in Schritt S5 berücksichtigt wird.

10. Verfahren (S0) nach einem der vorhergehenden Ansprüche, wobei das Last-Event eine Beschleunigung aufweist.

11. Verfahren (S0) nach einem der vorhergehenden Ansprüche, wobei das Last-Event eine Verzögerung aufweist.

12. Verfahren (S0) nach einem der vorhergehenden Ansprüche, wobei das Last-Event eine Kurvenfahrt mit konstantem Radius und steigender Geschwindigkeit aufweist.

13. Verfahren (S0) zum Analysieren eines Fahrzeugreifensatzes, wobei der Fahrzeugreifensatz mittels eines virtuellen Prototyps des Fahrzeugs (10) simuliert wird, welcher mittels eines Verfahrens nach einem der vorangehenden Ansprüche erzeugt ist.

14. Computerprogramm oder Speichermedium, welche Anweisungen aufweisen, die, wenn sie von einem Computer ausgeführt werden, diesen dazu veranlassen, ein erfindungsgemäßes Verfahren (S0) nach einem der vorhergehenden Ansprüche auszuführen.

15. System (40) zum Erzeugen eines virtuellen Prototyps eines Fahrzeugs (10) auf der Grundlage von Daten aus Straßenmessungen, welches Mittel zum Parametrieren des Reifenmodells (18) aufweist, wobei die Mittel zum Parametrieren umfassen:
Mittel (41) zum Berechnen wenigstens eines Werts für eine Längskraft eines Reifens auf der Grundlage von während einer Messfahrt aufgenommenen Werten von Messgrößen;
Mittel (43) zum Berechnen wenigstens eines Werts für eine Schlupfrate des Reifens auf der Grundlage von während einer Messfahrt aufgenommenen Werten von Messgrößen;
Mittel (44) zum Simulieren des Fahrzeugs (10) mittels eines Reifenmodells (M), wobei in das Reifenmodell (18) wenigstens die folgenden physikalischen Eigenschaften des Fahrzeugs (10) als Parameter eingehen:
Gewicht des Fahrzeugs (10), Radstand, Spurweite Schwerpunkt und Lenkübersetzung;
wobei Werte wenigstens eines simulierten Traktionsparameters (24) als Zielgröße ausgegeben werden;
Mittel (45) zum Vergleichen des wenigstens einen gemessenen Werts des wenigstens eines Traktionsparameters mit dem wenigstens einen simulierten Wert des wenigstens einen Traktionsparameters (24);
Mittel (46) zum Anpassen des Fahrzeugmodells, um den simulierten Wert des wenigstens einen Traktionsparameters (24) dem auf der Grundlage der Straßenmessungen ermittelten gemessenen Wert des wenigstens einen Traktionsparameters (22) durch Veränderung der Pacejka-Parameter anzugleichen; und
eine Schnittstelle (47) zum Ausgeben von Werten für Pacejka-Parameter des Reifenmodells (18);
und wobei die Mittel zum Parametrieren eingerichtet sind, das Reifenmodell (18) so lange anzupassen, bis eine Abbruchbedingung erreicht ist.

## Claims

1. Computer-implemented method (S0) for generating a virtual prototype, in particular for the indirect measurement of Pacejka parameters, of a multi-wheeled vehicle (10) based on road measurement data, comprising the following steps:
S1) Providing a tire database (12) comprising multiple tire datasets (14) with Pacejka parameters;
S2) Providing a vehicle model comprising a digital twin (16) of the vehicle (10) and a tire model (18) adaptable via a tire dataset (14);
S3) Providing a tire dataset (14) for the tire model (18) from the tire database (12);
S4) Performing a test drive with the vehicle (10), wherein the test drive includes a load event and during the load event a measured value of a traction parameter (22) of at least one of the tires is determined;
S5) Simulating the load event with the vehicle model, wherein at least one simulated value of the traction parameter (24) of at least one of the tires is output as a target variable;
S6) Comparing the value of the traction parameter (22) measured in step S4 with the simulated value of the traction parameter (24) in step S5;
S7) Adjusting the tire data set (14) to match the simulated value of the traction parameter (24) to the measured value of the traction parameter (22) by changing the values of the Pacejka parameters; wherein
steps S5 to S7 are repeated until a termination condition is reached; and subsequently S8) outputting the values of the Pacejka parameters of the tire model (18).

2. Method according to claim 1, wherein in step S4) a measured value of a traction parameter (22) of at least one of the wheels is determined by measuring a speed, an acceleration and a rate of rotation of the vehicle parallel to the road, as well as a rotational speed and a torque of the wheel.

3. Method (S0) according to claim 1 or 2, wherein the traction parameter comprises a grip, and/or a slip rate and/or a slip angle.

4. Method (S0) according to one of the preceding claims, wherein steps S4 to S8 are performed for each of the driven wheels.

5. Method (S0) according to one of the preceding claims, wherein the termination condition comprises reaching a threshold of an adjustment quality.

6. Method (S0) according to claim 5, wherein the adjustment quality is calculated using the least squares method.

7. Method (S0) according to one of the preceding claims, further comprising the step: controlling and/or regulating the vehicle (10) on the basis of the values output in step S8.

8. Method (S0) according to one of the preceding claims, wherein the wheel suspension of the vehicle (10) is taken into account in the vehicle model.

9. Method according to one of the preceding claims wherein the road surface is also taken into account in step S5.

10. Method (S0) according to one of the preceding claims, wherein the load event comprises an acceleration.

11. Method (S0) according to one of the preceding claims, wherein the load event comprises a delay.

12. Method (S0) according to one of the preceding claims, wherein the load event comprises a curve with constant radius and increasing speed.

13. Method (S0) for analyzing a set of vehicle tires, wherein the set of vehicle tires is simulated by means of a virtual prototype of the vehicle (10) which is generated by means of a method according to one of the preceding claims.

14. Computer program or storage medium comprising instructions which, when executed by a computer, cause the computer to execute a method (S0) according to one of the preceding claims.

15. System (40) for generating a virtual prototype of a vehicle (10) based on data from road measurements, which includes means for parameterizing the tire model (18), wherein the means for parameterizing comprise: Means (41) for calculating at least one value for a longitudinal force of a tire based on values of measured quantities recorded during a test drive; Means (43) for calculating at least one value for a slip rate of the tire based on values of measured quantities recorded during a test drive; Means (44) for simulating the vehicle (10) using a tire model (M), wherein at least the following physical properties of the vehicle (10) are included as parameters in the tire model (18):
Vehicle weight (10), wheelbase, track width, center of gravity, and steering ratio; wherein values of at least one simulated traction parameter (24) are output as a target variable; Means (45) for comparing the at least one measured value of the at least one traction parameter with the at least one simulated value of the at least one traction parameter (24); Means (46) for adjusting the vehicle model to align the simulated value of the at least one traction parameter (24) with the measured value of the at least one traction parameter (22) determined on the basis of the road measurements by changing the Pacejka parameters; and an interface (47) for outputting values for Pacejka parameters of the tire model (18); and wherein the means for parameterization are set up to adapt the tire model (18) until a termination condition is reached.

## Revendications

1. Procédé mis en œuvre par ordinateur (S0) pour générer un prototype virtuel, en particulier pour la mesure indirecte des paramètres de Pacejka, d'un véhicule (10) comportant plusieurs roues, sur la base de données issues de mesures routières, comprenant les étapes suivantes :
S1) mise à disposition d'une base de données de pneus (12) comprenant plusieurs ensembles de données de pneus (14) avec des paramètres Pacejka;
S2) mise à disposition d'un modèle de véhicule comprenant un jumeau numérique (16) du véhicule (10) et un modèle de pneu (18) adaptable via un ensemble de données de pneus (14);
S3) Fourniture d'un ensemble de données de pneus (14) pour le modèle de pneu (18) à partir de la base de données de pneus (12);
S4) Réalisation d'un trajet de mesure avec le véhicule (10), le trajet de mesure comprenant un événement de charge et, pendant l'événement de charge, détermination d'une valeur mesurée d'un paramètre de traction (22) d'au moins un des pneus;
S5) simulation de l'événement de charge avec le modèle de véhicule, au moins une valeur simulée du paramètre de traction (24) d'au moins un des pneus étant émise comme grandeur cible;
S6) comparaison de la valeur du paramètre de traction (22) mesurée à l'étape S4 avec la valeur du paramètre de traction (24) simulée à l'étape S5;
S7) adaptation de l'ensemble de données de pneus (14) afin d'ajuster la valeur simulée du paramètre de traction (24) à la valeur mesurée du paramètre de traction (22) en modifiant les valeurs des paramètres de Pacejka; les étapes S5 à S7 étant répétées jusqu'à ce qu'une condition d'arrêt soit atteinte; puis
S8) Sortie des valeurs des paramètres Pacejka du modèle de pneu (18).

2. Procédé selon la revendication 1, dans lequel, à l'étape S4), une valeur mesurée d'un paramètre de traction (22) d'au moins une des roues est déterminée en mesurant une vitesse, une accélération et un taux de rotation du véhicule parallèlement à la chaussée, ainsi qu'une vitesse de rotation et un couple de la roue.

3. Procédé (S0) selon la revendication 1 ou 2, dans lequel le paramètre de traction comprend une adhérence et/ou un taux de glissement et/ou un angle de glissement.

4. Procédé (S0) selon l'une des revendications précédentes, dans lequel les étapes S4 à S8 sont effectuées pour chacune des roues motrices.

5. Procédé (S0) selon l'une des revendications précédentes, dans lequel la condition d'arrêt comprend l'atteinte d'une valeur seuil d'une qualité d'ajustement.

6. Procédé (S0) selon la revendication 5, dans lequel la qualité d'ajustement est calculée à l'aide de la méthode des moindres carrés.

7. Procédé (S0) selon l'une des revendications précédentes, comprenant en outre l'étape suivante : commande et/ou régulation du véhicule (10) sur la base des valeurs délivrées à l'étape S8.

8. Procédé (S0) selon l'une des revendications précédentes, dans lequel la suspension des roues du véhicule (10) est prise en compte dans le modèle de véhicule.

9. Procédé selon l'une des revendications précédentes, dans lequel le revêtement routier est également pris en compte à l'étape S5.

10. Procédé (S0) selon l'une des revendications précédentes, dans lequel l'événement de charge présente une accélération.

11. Procédé (S0) selon l'une des revendications précédentes, dans lequel l'événement de charge présente une décélération.

12. Procédé (S0) selon l'une des revendications précédentes, dans lequel l'événement de charge comprend un virage à rayon constant et à vitesse croissante.

13. Procédé (S0) pour analyser un jeu de pneus de véhicule, dans lequel le jeu de pneus de véhicule est simulé à l'aide d'un prototype virtuel du véhicule (10) généré au moyen d'un procédé selon l'une des revendications précédentes.

14. Programme informatique ou support de stockage comprenant des instructions qui, lorsqu'elles sont exécutées par un ordinateur, amènent celui-ci à exécuter un procédé (S0) selon l'invention, conformément à l'une des revendications précédentes.

15. Système (40) pour générer un prototype virtuel d'un véhicule (10) sur la base de données provenant de mesures routières, qui comprend des moyens pour paramétrer le modèle de pneu (18), les moyens de paramétrage comprenant :
des moyens (41) pour calculer au moins une valeur pour une force longitudinale d'un pneu sur la base de valeurs de grandeurs mesurées enregistrées pendant un trajet de mesure;
des moyens (43) pour calculer au moins une valeur pour un taux de glissement du pneu sur la base de valeurs de grandeurs mesurées enregistrées pendant un trajet de mesure ;
des moyens (44) pour simuler le véhicule (10) à l'aide d'un modèle de pneu (M), dans lequel au moins les propriétés physiques suivantes du véhicule (10) sont intégrées dans le modèle de pneu (18) en tant que paramètres:
poids du véhicule (10), empattement, voie, centre de gravité et rapport de direction ;
les valeurs d'au moins un paramètre de traction simulé (24) étant émises en tant que grandeur cible;
des moyens (45) pour comparer la au moins une valeur mesurée du au moins un paramètre de traction avec la au moins une valeur simulée du au moins un paramètre de traction (24);
des moyens (46) pour adapter le modèle de véhicule afin d'ajuster la valeur simulée du paramètre de traction (24) à la valeur mesurée du paramètre de traction (22) déterminée sur la base des mesures routières en modifiant les paramètres Pacejka; et
une interface (47) pour délivrer des valeurs pour les paramètres de Pacejka du modèle de pneu (18);
et dans lequel les moyens de paramétrage sont conçus pour adapter le modèle de pneu (18) jusqu'à ce qu'une condition d'arrêt soit atteinte.
